# EUROPÄISCHE PATENTANMELDUNG

(11) **EP 1 840 777 A1**
(43) Veröffentlichungstag der Anmeldung: **03.10.2007**
(21) Anmeldenummer: 06006282.5
(22) Anmeldetag: 27.03.2006
(51) Int. Cl.: G06F 21/00

(54) **Verfahren zur Einbringung einer digitalen Markierung in ein digitales Dokument**

(71) Anmelder: MediaSec Technologies GmbH, 45127 Essen (DE); Deutsche Telekom AG, 53113 Bonn (DE)
(72) Erfinder: Krüger, Roland, 46325 Borken (DE); Saar, Eva, 64347 Griesheim (DE); Schaaf, Joachim Dr., 64293 Darmstadt (DE); Koch, Eckhard, Dr., 45768 Marl (DE)
(74) Vertreter: Rösler, Uwe

(57) **Zusammenfassung**

Beschrieben wird ein Verfahren zur Einbringung einer digitalen Markierung in digitale Daten, vorzugsweise in ein digitales Dokument. Ferner wird ein Verfahren zur Überprüfung von mit einer digitalen Markierung versehenen digitalen Daten beschrieben.

Die Erfindung zeichnet sich dadurch aus, dass ein Satz von Berechtigungen für den Zugriff auf die digitalen Daten, so genannte Zugriffsrechte, vorgegeben wird, und dass durch eine an den digitalen Daten ausführbare Operation die Einbringung der die Zugriffsrechte enthaltenden digitalen Markierung in die digitalen Daten automatisch vorgenommen oder zumindest automatisch initiiert wird.

## Beschreibung

### Technisches Gebiet

Die Erfindung bezieht sich auf ein Verfahren zur Einbringung einer digitalen Markierung in digitale Daten, vorzugsweise in ein digitales Dokument, sowie auf ein Verfahren zur Überprüfung von mit einer digitalen Markierung versehenen digitalen Daten.

### Stand der Technik

Der Umgang mit und der Austausch von digitalen Daten, die zumeist in Form digitaler Dokumente oder aber auch in beliebig anderer Datenform vorliegen, bedarf einer besonderen Beachtung, möchte man verhindern, dass so genannte sensitive digitale Daten, die in der Regel auf Speicherbereichen von Rechnereinheiten oder beliebig anderen Speichermedien ab- oder zwischengespeichert sind, in Kenntnis unautorisierter Personen zu gelangen vermögen.

Bspw. wird heutzutage der vertrauliche Umgang mit Unternehmensdaten zumeist über eine gesonderte Rechteverwaltung des Dateisystems sichergestellt, die den Zugriff auf oder Aktionen mit den Daten regelt. So werden zur autorisierten Durchführung von an den Daten vorzunehmenden Operationen, wie beispielsweise Lesen, Schreiben, Löschen, Ausdrucken oder Versenden, so genannte Zugriffsrechte definiert, die zudem häufig geschützt sind, indem den jeweiligen Laufwerken oder Verzeichnissen, auf denen die digitalen Daten gespeichert sind, entsprechende Zugriffsrechte zugewiesen werden. Diese Zugriffsrechte werden im Allgemeinen durch das Betriebssystem definiert und durchgesetzt. Zum Beispiel kann man unter dem Betriebssystem Unix Rechte zum Lesen, Schreiben und Ausführen für alle, für eine spezielle Gruppe und/oder für den Besitzer des Dokuments definieren. Werden hingegen digitale Daten aus einem derart geschützten Laufwerk- oder Verzeichnisbereich in einen anderen Laufwerk- oder Verzeichnisbereich mit weniger restriktiven Zugriffsrechten verschoben, sind sie dort weniger geschützt und gegenüber einem Zugriff unautorisierter Personen frei zugänglich.

Vorwiegend im Bereich der Privatsphäre aber auch im Unternehmensbereich werden häufig Verschlüsselungstechnologien zusätzlich oder in Alleinverwendung eingesetzt, die durch Passwort-Vergabe bestimmten Adressaten oder Nutzern, die in Kenntnis eines jeweiligen Passwortes sind, die Möglichkeit geben, die verschlüsselten digitalen Dateien zu entschlüsseln und entsprechend weiterzuverarbeiten. Es liegt daher im Verantwortungsbereich der jeweils zugriffsberechtigten Personen, sorgfältig mit den Dateien umzugehen und sie in entsprechend geschützte Bereiche abzulegen.

Eine über das Internetportal des Zweiten Deutschen Fernsehens (ZDF) veröffentlichte Meldung (http://www.heute.de/ZDFheute/inhalt/11/0,3672,2340139,00.html) vom 19.07.2005 verdeutlicht, dass allein über das weltweit bekannte Internet-Suchportal GOOGLE^{®} bei Suchanfragen mit dem Stichwort "confidential" oder "for internal use" mehr als 19.000 Treffer aufgefunden werden konnten. Solche Dokumente landen zumeist aus Unachtsamkeit oder Versehen aus einem Firmennetz in einem Verzeichnis eines Webservers, ohne dass ein Verantwortlicher der Firma dies zur Kenntnis nimmt.

Eine der jüngsten technischen Hilfestellungen, durch die Mitarbeiter bei ihrer Verantwortung für die Vertraulichkeit von Informationen unterstützt werden können und die Nachlässigkeiten bei dieser Aufgabe zu beheben helfen, sieht die Kennzeichnung von digitalen Dateien mittels zusätzlicher Markierungen vor sowie deren Auffinden mittels geeigneter Dienste oder Programme, um letztlich geeignete Maßnahmen an der aufgefundenen digitalen Datei vornehmen zu können, mit dem Ziel unberechtigte Operationen an der digitalen Datei zu unterbinden.

Wird bspw. ein digitales Dokument aus einem geschützten Speicherbereich an einen Speicherort mit weniger restriktiven Zugriffsrechten verschoben, ist es dort weniger geschützt. Um zu verhindern, dass ein unberechtigter Zugriff auf das Dokument erfolgen kann, werden die Zugriffsrechte nicht nur am Speicherort selbst definiert, sondern die Zugriffsrechte werden dem Dokument direkt zugewiesen und im Dokument gespeichert, d.h. nicht in Form einer separaten Datei, sondern als Bestandteil des Dokumentes selbst. Zwar liegt das Dokument in diesem Fall immer noch auf dem neuen, weniger restriktiven Laufwerk/Verzeichnis, seine echten Zugriffsrechte sind ihm aber immer noch untrennbar zugeordnet und können überprüft und durchgesetzt werden, z.B. über ein spezielles Überwachungsprogramm.

In der Praxis ist die Zuordnung der Zugriffsrechte zu einem Dokument recht aufwendig und für einen Nutzer umständlich umzusetzen. Zwar ist die Zuordnung von Zugriffsrechten zu einzelnen digitalen Daten bzw. Dokumenten über das Betriebssystem, wie eingangs bereits erwähnt, recht einfach, so werden einem Dokument gewisse Zugriffsrechte über das Betriebssystem in Abhängigkeit des Speicherortes während dem Speichervorgang zugeordnet. So kann zum Beispiel ein Nutzer für Dokumente eines Projekts ein Verzeichnis anlegen, auf das nur Mitarbeiter dieses Projekts Zugriff erhalten. Gilt es jedoch eine zusätzliche Einbettung von in das Dokument ein zupflegenden Zugriffsrechten vorzunehmen, die unabhängig von einem Speicherort und gegebenenfalls auch unabhängig von einem lokalen Betriebssystem sind, muss der Nutzer hierfür eine aufwendige Einbettungsfunktion starten und entsprechende Zugriffsrechte eingeben. Bei einer großen Vielzahl von Dokumenten kann dieser Vorgang sehr aufwendig und störend sein, außerdem kann das Einpflegen zusätzlicher Speicherort unabhängiger Zugriffsbefehle auch vergessen werden und ist darüber hinaus fehleranfällig.

### Darstellung der Erfindung

Der Erfindung liegt die Aufgabe zugrunde ein Verfahren zur Einbringung einer digitalen Markierung in digitale Daten, vorzugsweise in ein digitales Dokument, derart anzugeben, dass die Einbringung von zusätzlichen Informationen in digitale Daten nutzerfreundlich vorgenommen werden soll, ohne dabei nutzerseitige Eingabeinformationen abfragen zu müssen und zusätzliche Eingabebefehle abzuverlangen. Lediglich zu Zwecken einer Zustimmungsabfrage zur Einbringung entsprechender Zusatzinformationen könnte der Nutzer durch eine Eingabeaufforderung abgefragt werden. Die weitere Einbettung der Zusatzinformationen, die letztlich Zugriffsrechte umfassen, soll möglichst im Hintergrund und ohne eine aktive Teilnahme durch den Nutzer erfolgen. Ferner soll es möglich sein die in die digitale Daten eingebrachten Zusatzinformationen mittels geeigneter Tools zu erfassen, um die erfassten bzw. aufgefundenen digitalen Daten in Abhängigkeit ihrer eingebrachten Zusatzinformationen und ihrem aktuellen Speicherort überprüfen zu können, um letztlich weitere Maßnahmen treffen zu können, durch die ein unautorisierte Zugriff auf die digitalen Daten ausgeschlossen werden kann.

Die Lösung der der Erfindung zugrunde liegenden Aufgabe ist im Anspruch 1 angegeben. Gegenstand des Anspruches 12 ist ein Verfahren zur Überprüfung von mit einer digitalen Markierung versehenen digitalen Daten. Den Erfindungsgedanken vorteilhaft weiterbildende Merkmale sind Gegenstand der Unteransprüche sowie der weiteren Beschreibung zu entnehmen.

Lösungsgemäß ist ein Verfahren zur Einbringung einer digitalen Markierung in digitale Daten, vorzugsweise in ein digitales Dokument, derart ausgebildet, dass ein Satz von Berechtigungen für den Zugriff auf die digitalen Daten, so genannte Zugriffsrechte, vorgegeben wird, und dass durch eine an den digitalen Daten ausführbare Operation die Einbringung der die Zugriffsrechte enthaltenden digitalen Markierung in die digitalen Daten automatisch vorgenommen oder zumindest automatisch initiiert wird.

Die der Erfindung zugrunde liegende Idee beruht auf der automatischen Verknüpfung von Zugriffsrechten und dem Vertraulichkeitsstatus einer Datei und den darin enthaltenen Informationen unmittelbar mit dieser Datei selbst. Hierzu werden Dateien in geeigneter Weise markiert. Der Vorgang der digitalen Markierung der digitalen Daten erfolgt ausgelöst durch eine Operation, die abhängig oder unabhängig vom Nutzer initiiert wird, aber nicht notwendigerweise von diesem wahrgenommen wird. Beispielsweise wird durch ein Öffnen, Schließen mit Abspeichern, Modifizieren, Darstellen, Drucken, Verschieben, Umbenennen und/oder durch ein Versenden der digitalen Daten der Vorgang der Einbringung der die Zugriffsrechte enthaltenden digitalen Markierung in die digitalen Daten ausgelöst.

Ebenso ist es möglich den Nutzer in den Vorgang der Markierung aktiv mit einzubinden, indem nach Ausführung einer der vorstehend in nicht abschließender Form aufgezählten Operationen und vor der Einbringung der digitalen Markierung eine von dem Nutzer zu beantwortende Zustimmungsabfrage erfolgt. So obliegt es dem Nutzer im Rahmen der Zustimmungsabfrage seine Zustimmung zur Einbringung der digitalen Markierung in die digitale Datei zu geben oder die Zustimmung zu verweigern. Ebenso ist es möglich die vorgegebene Auswahl der in der digitalen Markierung enthaltenen Zugriffsrechte noch vor dem Markierungsvorgang durch den Nutzer zu verändern.

Mit Hilfe dieser Markierungen ist es dann möglich, die Zugriffsrechte und den Vertraulichkeitsstatus einer Datei explizit und unabhängig vom Speicherort festzulegen und letztlich auch zu erkennen. Dies gilt auch für alle Kopien der Datei.

Zur Auswahl der Zugriffsrechte stehen grundsätzlich die durch das Betriebssystem vorgegebenen oder vorgebbaren Zugriffsrechte am jeweiligen Speicherort zur Verfügung. Durch Soft- und/oder Hardware unterstützt können diese Zugriffsrechte aus dem Betriebssystem ausgelesen werden, um sie nachfolgend im Rahmen einer digitalen Markierung in die digitalen Daten einzubringen. Darüber hinaus können durch den Nutzer individuell vorgebbare Zugriffsrechte definiert werden, die beispielsweise in einer Rechte-Datei eingetragen und abgespeichert werden. Beispielsweise könnten in einer derartigen Datei folgende Anweisungen enthalten sein: "Word-Dokumente dürfen von allen Nutzern gelesen, aber nicht verändert werden", "Word-Dokumente dürfen nicht ausgedruckt werden", "Excel-Tabelle wird nach erstmaligen unautorisiertem Öffnen verschlüsselt, eine SMS und/oder e-mail wird an nachfolgende Adresse gesendet" etc.. Die individuell erstellbare Rechte-Datei kann gleichfalls wie die durch das Betriebssystem definierten Zugriffsrechte softwareunterstützt in die digitale Datei derart fest eingebettet werden, so dass sämtliche die Zugriffsrechte enthaltenden zusätzlichen Informationen in den digitalen Daten noch enthalten sind und erhalten bleiben, auch wenn sich der Speicherort der Daten verändert.

Bei der Einbringung der die Zugriffsrechte enthaltenden digitalen Markierung in die digitalen Daten kann die digitale Markierung vorzugsweise selbst digital signiert werden, um auf diese Weise einen erhöhten Grad an Authentizität sowie deren Integrität zu erzielen. Zudem eignet sich insbesondere die Wasserzeichentechnik dafür, den Inhalt der digitalen Markierung in Form eines Wasserzeichens in die digitalen Daten in geeigneter Weise einzubetten.
Die Einbringung der digitalen Markierung unabhängig von ihrer Form und Darstellung wird in besonders vorteilhafter Weise im Bereich des Headerabschnittes oder in einem freien Datenfeld der digitalen Daten eingetragen, um auf diese Weise die Struktur und den Inhalt aller übrigen Dateninhalte nicht zu stören und andererseits einen möglichst hohen Grad an Robustheit gegenüber äußeren Einflüssen, wie bspw. Kopieren, Verschieben, Formatieren der digitalen Daten etc., zu erhalten.

Ferner sieht eine vorteilhafte Weiterbildung oder Ergänzung des lösungsgemäßen Verfahrens vor, die in die digitalen Daten eingebetteten Zugriffsrechte zu loggen und dem Nutzer im Nachhinein, also nach erfolgtem Einbringen der digitalen Markierung in die Daten, die Log-Datei anzuzeigen und dem Nutzer die Möglichkeit zu verschaffen, die eingebetteten Zugriffsrechte rückgängig zu machen oder aber diese zu modifizieren.

Neben den bereits erwähnten Inhalten der digitalen Markierung hinsichtlich der Zugriffsrechte ist es im Lichte einer Ausführung einer bestimmten Funktion, durch die bspw. die Zugreifbarkeit auf die digitale Datei beeinflussbar ist, vorteilhaft, einen ausführbaren Programmcode in die Zugriffsrechte oder zumindest in die digitale Markierung zu implementieren, der bei Ausführung einer Operation an den markierten, digitalen Daten aktiviert wird. Beispielsweise sei angenommen, dass sich ein digitales Dokument in einem unsicheren Speicherbereich befindet und das Dokument durch einen unberechtigten Aufruf zu öffnen versucht wird. In einem derartigen Fall wird durch die an dem Dokument durchgeführte Operation des Öffnens ein Programmcode aktiviert, der zur Folge hat, dass das Dokument verschlüsselt und eine Nachricht an eine vorgegebene Adresse abgesetzt wird. Alternativ könnte eine Authentisierungsabfrage am Ort des versuchten Öffnens durchgeführt werden, die je nach erfolgter Eingabe die Daten zur freien Einsicht zulässt oder aber unter Verschluss belässt.

Die zur Durchführung des lösungsgemäßen Verfahrens auf einer Rechnereinheit implementierbare Software kann ständig auf dem Rechner des Nutzers im Hintergrund in Betrieb sein und bei jeder Operation an einer digitalen Datei oder einem digitalen Dokument die Einbettung der Zugriffsrechte durchführen, sofern dies nicht an der jeweiligen Datei schon erfolgt ist. Die Software kann alternativ auch zu bestimmten Zeiten, z.B. nachts bestimmte Speicherbereiche der Rechnereinheit eines Nutzers durchsuchen und in neu gespeicherten Dokumenten ohne Markierung die entsprechende Markierung einbetten. Die Software kann gleichfalls auch in Form eines so genannten mobilen Agenten ausgebildet sein, der verschiedene Laufwerke bzw. Verzeichnisse einer Rechnereinheit nach neu gespeicherten Dokumenten ohne Markierung aktiv durchsucht und in diese nachfolgend die entsprechenden Rechte einbettet.

Die bisherigen Ausführungen betrafen überwiegend den Vorgang des automatischen Einbringens einer digitalen Markierung in digitale Daten, wobei die Markierung speicherortresistente Zugriffsrechte enthält, die die Nutzungseigenschaften der digitalen Daten am jeweiligen Speicherort definieren und für eine Zugriffsicherheit zu sorgen.

Neben dem Vorgang des Markierens im vorstehenden Sinne wird im Weiteren ein lösungsgemäßes Verfahren zur Überprüfung von mit einer digitalen Markierung gemäß dem beschriebenen lösungsgemäßen Verfahren versehenen digitalen Daten derart angegeben, dass mittels eines lokal auf einer Rechnereinheit vorgesehenen Dienstes ein vorgebbarer Speicherbereich der Rechnereinheit und/oder eine vorgebbare Anzahl digitaler Daten auf der Rechnereinheit nach digitalen Markierungen untersucht werden, oder dass ein mobiler Agent über ein Netz verbundene Rechnereinheiten auf ein Vorhandensein von mit digitalen Markierungen versehenen digitalen Daten untersucht. Werden derartig markierte Daten an einem Speicherort gefunden, so wird durch eine vorgebbare Sicherheitspolitik in Abhängigkeit von den Zugriffsrechten und/oder in Abhängigkeit des Speicherortes, an dem die markierten digitalen Daten aufgefunden werden, über ein weiteres Schicksal der aufgefundenen jeweils mit einer digitalen Markierung versehenen digitalen Daten entschieden und eine Aktion ausgelöst wird.

Je nach der vorgegebenen Sicherheitspolitik in Abhängigkeit von den Zugriffsrechten und/oder in Abhängigkeit des Speicherortes, an dem die jeweils markierten Daten aufgefunden worden sind, gilt es aus eine Anzahl unterschiedlicher Aktionen auszuwählen, von denen nachfolgend nur ein Teil möglicher Aktionen beispielhaft erwähnt ist:
Im Falle der Gewährleistung aller geforderten Sicherheitsbedingungen kann ein ungehinderter Zugriff auf die aufgefundenen Daten gewährleistet werden. Handelt es sich jedoch um einen unsicheren Speicherort, so können folgende Aktionen alternativ oder in Kombination ausgelöst werden:
   - Auslösen einer Zugriffssperre auf die digitalen Daten,
   - Verschieben der digitalen Daten an einen sicheren Speicherort, in Art einer Quarantäne,
   - Benachrichtigen eines Urhebers oder Eigentümers der digitalen Daten vorzugsweise mittels SMS oder email,
   - Verschlüsseln der digitalen Daten.

Ferner kann insbesondere in Hinblick auf einen Datenaustausch zwischen Rechnereinheiten innerhalb eines Rechnernetzes, sei es im Rahmen eines firmeneigenen Intranets oder des globalen Internets, ein auf einem als Server dienenden Rechnerknoten befindlicher Dienst vorgesehen werden, der vom Server in das Netz auszusendende und/oder vom Netz zum Server eingehende digitale Daten, die mit einer entsprechenden Markierung versehen sind, untersucht, und in Abhängigkeit einer durch die Zugriffsrechte festgelegten Sicherheitspolitik eine der vorstehenden Aktionen auslöst. Auf diese Weise kann gewährleistet werden, dass einerseits ein unautorisiertes Versenden sicherheitsrelevanter oder sensibler Informationen vermieden werden kann. Andererseits kann der Empfang derartiger unautorisierter digitaler Daten von vornherein unterbunden werden.

## Patentansprüche

1. Verfahren zur Einbringung einer digitalen Markierung in digitale Daten, vorzugsweise in ein digitales Dokument,
**dadurch gekennzeichnet, dass** ein Satz von Berechtigungen für den Zugriff auf die digitalen Daten, so genannte Zugriffsrechte, vorgegeben wird, und
dass durch eine an den digitalen Daten ausführbare Operation die Einbringung der die Zugriffsrechte enthaltenden digitalen Markierung in die digitalen Daten automatisch vorgenommen oder zumindest automatisch initiiert wird.

2. Verfahren nach Anspruch 1,
**dadurch gekennzeichnet, dass** nach Ausführung der Operation und vor der Einbringung eine Zustimmungsabfrage ergeht.

3. Verfahren nach Anspruch 2,
**dadurch gekennzeichnet, dass** die Zustimmungsabfrage durch einen Nutzer im Wege einer der folgenden zu tätigenden Eingaben beantwortet wird:
a) Zustimmungserklärung
b) Änderung der Zugriffsrechte,
c) Ablehnen der Einbringung.

4. Verfahren nach einem der Ansprüche 1 bis 3,
**dadurch gekennzeichnet, dass** die an den digitalen Daten ausführbare Operation ein Öffnen, Schließen mit Abspeichern, Modifizieren, Darstellen, Drucken und/oder ein Versenden der digitalen Daten umfasst.

5. Verfahren nach einem der Ansprüche 1 bis 4,
**dadurch gekennzeichnet, dass** die Vorgabe der Zugriffsrechte durch Informationen erfolgt, die durch ein Betriebssystem einer Rechnereinheit am jeweiligen Speicherort der digitalen Daten diesen zugeordnet werden und/oder die von einem Betriebssystem unabhängige, zusätzliche Informationen umfassen.

6. Verfahren nach einem der Ansprüche 1 bis 5,
**dadurch gekennzeichnet, dass** die Einbringung der Zugriffsrechte in die digitalen Daten durch Einbettung eines digitalen Wasserzeichens, in dem die Zugriffsrechte enthalten sind, in die digitalen Daten erfolgt.

7. Verfahren nach einem der Ansprüche 1 bis 6,
**dadurch gekennzeichnet, dass** die Einbringung der Zugriffsrechte in einen Headerabschnitt oder einem freien Datenfeld der digitalen Daten erfolgt.

8. Verfahren nach einem der Ansprüche 1 bis 7,
**dadurch gekennzeichnet, dass** die Vorgabe und Einbringung der Zugriffsrechte derart vorgenommen werden, dass die Zugriffsrechte unabhängig vom Speicherplatz der digitalen Daten und/oder in durch Kopieren replizierte Daten unverändert erhalten bleiben.

9. Verfahren nach einem der Ansprüche 1 bis 8,
**dadurch gekennzeichnet, dass** die in die digitalen Daten eingebrachten Zugriffsrechte geloggt werden, so dass eine Nachverfolgbarkeit der markierten digitalen Daten und/oder eine nachträgliche Modifikation oder ein Rückgängigmachen der Einbringung der Zugriffsrechte möglich werden.

10. Verfahren nach einem der Ansprüche 1 bis 9,
**dadurch gekennzeichnet, dass** die Zugriffsrechte einen Programmcode enthalten, der bei Ausführen einer Operation an den markierten Daten aktiviert wird.

11. Verfahren nach Anspruch 10,
**dadurch gekennzeichnet, dass** der Programmcode eine Authentisierungsabfrage oder ein Absenden einer Nachricht auslöst.

12. Verfahren zur Überprüfung von mit einer digitalen Markierung gemäß dem Verfahren nach einem der Ansprüchen 1 bis 11 versehenen digitalen Daten,
**dadurch gekennzeichnet, dass** mittels eines lokal auf einer Rechnereinheit vorgesehenen Dienstes ein vorgebbarer Speicherbereich der Rechnereinheit und/oder eine vorgebbare Anzahl digitaler Daten auf der Rechnereinheit nach digitalen Markierungen untersucht werden, oder
dass ein mobiler Agent über ein Netz verbundene Rechnereinheiten auf ein Vorhandensein von mit digitalen Markierungen versehenen digitalen Daten untersucht,
dass in Abhängigkeit einer vorgebbaren Sicherheitspolitik und/oder in Abhängigkeit des Speicherortes, an dem die markierten digitalen Daten aufgefunden werden, über ein weiteres Schicksal der aufgefundenen jeweils mit einer digitalen Markierung versehenen digitalen Daten entschieden und eine Aktion ausgelöst wird.

13. Verfahren nach Anspruch 12,
**dadurch gekennzeichnet, dass** die Aktion in einer oder einer Kombination der folgenden Weisen ausgeführt wird:
- Auslösen einer Zugriffssperre auf die digitalen Daten,
- Verschieben der digitalen Daten an einen sicheren Speicherort, in Art einer Quarantäne,
- Benachrichtigen eines Urhebers oder Eigentümers der digitalen Daten vorzugsweise mittels SMS oder email,
- Verschlüsseln der digitalen Daten.

14. Verfahren nach Anspruch 12 oder 13,
**dadurch gekennzeichnet, dass** ein auf einem als Server dienenden Rechnerknoten befindlicher Dienst zur Untersuchung von mit einer digitalen Markierung versehenen digitalen Daten, über ein Netz vom Server auszusendende und/oder zum Server eingehende digitale Daten untersucht, und dass in Abhängigkeit der Sicherheitspolitik eine Aktion ausgelöst wird.
